# EUROPEAN PATENT APPLICATION

(11) **EP 4 407 011 A1**
(43) Date of publication of application: **31.07.2024**
(21) Application number: 22919555.7
(22) Date of filing: 19.01.2022
(51) Int. Cl.: C09K 5/14, F28D 20/02, F24S 60/10

(54) **GLASS CRYSTAL-BASED ACTIVELY-CONTROLLABLE BAROCALORIC MATERIAL SOLID STATE PHASE TRANSFORMATION HEAT STORAGE AND HEAT RELEASE METHOD, APPARATUS AND USES**

(30) Priority: 13.01.2022 CN 202210034888
(71) Applicant: Institute of Metal Research, Chinese Academy of Sciences, Shenyang, Liaoning 110016 (CN)
(72) Inventor: LI, Bing, Shenyang, Liaoning 110006 (CN); ZHANG, Kun, Shenyang, Liaoning 110006 (CN); ZHANG, Zhidong, Shenyang, Liaoning 110006 (CN)
(74) Representative: ZHAOffice SPRL
(86) International application number: PCT/CN2022/072655
(87) International publication number: WO 2023/133909

(57) **Abstract**

The present invention discloses a method, device and application of solid-state phase change heat storage and heat release of barocaloric materials based on glassy-crystals and active control, which belongs to the technical field of solid-state phase change energy storage. A glassy-crystal phase is an intermediate metastable state formed in the change process from a high temperature plastic-crystal phase to an ordered crystal phase, which can be obtained by cooling the high temperature plastic-crystal disordered state of the barocaloric materials quickly. Rapid cooling makes the high temperature disordered state of the material supercooled and frozen, thereby avoiding the full oriented order that generally occurs at low temperature. The material is applied with a small pressure, which can achieve the change from the glassy-crystal phase to the ordered crystal phase, thereby achieving heat release. The glassy-crystal phase has good thermal stability, thereby achieving long-term storage, long-distance transportation and controllable release of heat energy.

## Description

### Technical Field

The present invention relates to the technical field of solid-state phase change energy storage, and particularly relates to a method, device and application of solid-state phase change heat storage and heat release of barocaloric materials based on glassy-crystals and active control.

### Background

Climate change is a global problem for humans. As countries emit carbon dioxide, greenhouse gas has continued to increase, thereby threatening the living system. Under this background, the countries in the world have reduced the emission of the greenhouse gas by means of global compact, and China has also proposed the strategic goals of "peak carbon dioxide emissions" and "carbon neutrality". Effective ways to achieve the goal of carbon neutrality is to use clean energy and improve the current energy utilization efficiency. However, the current data shows that up to 72% of the energy has been wasted in the conversion process of the energy all over the world, mainly has been dissipated in the form of heat energy, which has not been effectively used, directly bringing the problems of low energy utilization efficiency and fossil energy dissipation. The recovery and the utilization of the heat energy play an extensive and critical role in achieving the sustainable utilization of the energy. The heat storage technology is a gradually developed technology that stores heat energy such as solar optothermal, terrestrial heat, industrial waste heat and low-grade waste heat with the heat storage materials as the medium, and releases the heat energy when needed, to try to solve the problems caused by the mismatch between the heat energy supply and demand in time, space or strength to maximize the energy utilization rate of the entire system. Therefore, the development of high-performance heat storage materials is an important link to improve the energy efficiency, reduce energy consumption and finally solve the problem of carbon emission.

The latent heat storage technology based on phase change materials uses the own phase change process of the materials to absorb and release the heat to achieve the storage and the utilization of the heat. Compared with the sensible heat storage technology, the phase change latent heat storage materials outputs stable energy and has large heat storage density and several times of heat storage per unit volume of the sensible heat storage materials. Wherein the solid-solid phase change heat storage materials does not generate liquid phase in the process of phase change and has relatively small volume change before and after phase change. It is non-toxic, non-corrosive, low in requirements for the materials and processing technology of a container, small in the degree of supercooling and long in the service life, which is regarded as the ideal heat storage mode. However, the traditional solid-solid phase change materials have small latent heat of phase change and limited heat storage capacity. At the same time, the phase change behavior of the traditional solid-solid phase change materials completely depend on the change of ambient temperature, and may spontaneously conducts phase change with the gradual reduction of ambient temperature, which will release heat uncontrollably, so that accurate control of heat release time cannot be achieved and the initiative in heat regulation is lacked. Thus, such materialscannot be transported over long distances, or cannot be used in low temperature environments with larger temperature span, thereby seriously restricting the recovery and the utilization of the heat energy. With the continuous improvement of requirements for the heat storage technology, a new challenge has been posed for the development of solid-state phase change heat storage materials that has high heat storage performance and active control of heat release.

The solid-solid phase change materials involves three phase structures: crystal phase, plastic-crystal phase and glassy-crystal phase. The crystal phase is a completely ordered state, and the orientations of lattices and structural units are in ordered states. The plastic-crystal phase is a highly disordered state and the orientations of the organic molecules or inorganic structural units that compose the materials are completely disordered, but the position of the center of mass still maintains long-range ordered lattices. The degree of order of the glassy-crystal phase is between the crystal phase and the plastic-crystal phase, and is a state of center of mass order and orientation disorder (frozen state). Not all the solid phase change materials have these three phase structures at the same time. Only a part of the materials has the plastic-crystal phase at the same time, and only a few of the plastic-crystal materials have the glassy-crystal phase.

The barocaloric effect refers to the phenomenon in which phase change can occur under pressure-driven mode and then a thermal effect is generated. In recent years, the applicant team has made breakthrough progress in the research of barocaloric materials with the barocaloric effect, and the entropy change of some barocaloric materials can be several hundred J kg⁻¹ k⁻¹. In the barocaloric refrigeration technology, the reversible barocaloric effect is a prerequisite for achieving the application of the efficient solid-state refrigeration technology. However, the applicant team has found in the research of the barocaloric materials with the glassy-crystal phase that, the barocaloric effect has irreversible properties. That is, in the heating process, such materials with the glassy-crystal phase can change from the ordered crystal phase to the plastic-crystal phase, but in the cooling process, such materials still cannot generate reversible phase change at a temperature far below the phase change point. Therefore, although such barocaloric materials with irreversible barocaloric effect has very large entropy change, it cannot be used as barocaloric refrigeration materials in practical use. Surprisingly, it is expected to achieve the long-term, wide-temperature range and cross-region storage effects of heat based on the irreversible phase change of such barocaloric materials with the glassy-crystal phase. This is because such materials with the glassy-crystal phase does not spontaneously generate phase change as the temperature decreases. One of the reasons for this result is that such barocaloric materials is supercooled and frozen in the process of rapid cooling, and the glassy-crystal phase is formed, without the direct change to a low temperature ordered phase that is completely ordered. A large number of disordered states are preserved and frozen, which causes that the materials in the glassy-crystal phase still has large entropy, thereby ensuring the sufficiency of heat storage.

In addition, similar to the pressure drivability of the phase change of the barocaloric materials, after the glassy-crystal phase is formed by rapidly cooling the plastic-crystal phase, the change from the glassy-crystal phase to the low temperature ordered crystal phase can also be achieved by the driving mode such as the application of isostatic pressure, so as to achieve the purpose of releasing latent heat. The controllable performance of the glassy-crystal phase by pressure provides conditions for the accurate controllability of the heat release time when such barocaloric materials is used as the heat storage materials. Accordingly, the organic combination of the plastic-crystal phase and the glassy-crystal phase of such barocaloric materials is expected to solve the limitations of the current phase change heat storage materials in the solid barocaloric materials, achieve cross-temperature range, long-distance and long-term storage of the heat and control the heat release time accurately.

### Summary

To overcome the problems in the above solid-state phase change heat storage and heat release, the purpose of the present invention is to provide a method, device and application of solid-state heat storage and heat release which is driven by pressure to actively control heat release.

To achieve the above purpose, the present invention adopts the following technical solution:
A method of controllable solid-state phase change heat storage and heat release of barocaloric materials comprises: step 1: heating a barocaloric materials sample to make the sample in a high temperature plastic-crystal phase state; step 2: rapidly cooling the barocaloric materials in the high temperature plastic-crystal phase to obtain the barocaloric materials in the glassy-crystal phasebarocaloric materials, and realizing long-time heat energy storage in the barocaloric materials under the glassy-crystal phase state; and step 3: when heat release is needed, controlling the heat release by applying pressure as a driving mode to realize the controllable storage, transfer and utilization of heat energy.

Wherein in step 2, the mode for rapid cooling to obtain the glassy-crystal phase comprises cooling at a cooling rate >2K/min or instant cooling of the high temperature plastic-crystal phase sample with ice water or liquid nitrogen. In step 3, the mode of applying pressure comprises isostatic pressure applying or needling pressurization. The barocaloric materials is preferably one or more of 2-amino-2-methyl-1,3-propanediol (CH₃)C(CH₂)(CH₂OH)₂(AMP), m-carborane C₂B₁₀H₁₂, 1-cyanoadamantane C₁₁H₁₅N(CAN), 2-adamantanone C₁₀H₁₄O(AON) and pentachloronitrobenzene C₆Cl₅NO₂(PCNB) in plastic-crystal material. When 2-amino-2-methyl-1,3-propanediol (AMP) is selected as the barocaloric materials, the material generates phase change at 355 K and absorbs heat to change into the high temperature plastic-crystal phase state, a corresponding enthalpy change value is 215 J g⁻¹, and an entropy change value is 606 J kg⁻¹ K⁻¹. The glassy-crystal phase state is obtained when 2-amino-2-methyl-1,3-propanediol (AMP) in the high temperature plastic-crystal phase state is rapidly cooled to a low temperature state of 273K. The obtained 2-amino-2-methyl-1,3-propanediol (AMP) in the glassy-crystal phase state is stored at 273K, or heated to a temperature state less than or equal to room temperature; and the heat can be stored in 2-amino-2-methyl-1,3-propanediol (AMP) for a long time, without spontaneous phase change heat release. When 2-amino-2-methyl-1,3-propanediol (AMP) in an insulating state at 273K temperature is applied with a pressure greater than or equal to 67bar, an obvious exothermic peak may appear, the corresponding enthalpy change value is 133 J g⁻¹ and the entropy change value is 487 J kg⁻¹ K⁻¹.

A heat storage and heat exchange device comprising barocaloric materials comprises a heating unit for heating the barocaloric materials so that the barocaloric materials is in a high temperature plastic-crystal phase; a rapid cooling unit for rapidly cooling the barocaloric materials in the high temperature plastic-crystal phase to obtain the barocaloric materials in the glassy-crystal phasebarocaloric materials; and a pressure applying unit for applying isostatic pressure to the barocaloric materials when heat release is needed to realize the controllable storage, transfer and utilization of heat energy. The barocaloric materials is preferably a barocaloric materials with glassy-crystal phase. Further, the barocaloric materials is preferably one or more of 2-amino-2-methyl-1,3-propanediol (CH₃)C(CH₂)(CH₂OH)₂(AMP), m-carborane C₂B₁₀H₁₂, 1-cyanoadamantane C₁₁H₁₅N(CAN), 2-adamantanone C₁₀H₁₄O(AON) and pentachloronitrobenzene C6Cl₅NO₂(PCNB).

A method for recycling waste heat in a thermal power plant uses the barocaloric materials with glassy-crystal phase of the present invention to absorb the heat of equipment comprising pipelines of a power plant cooling tower, boiler blowdown components and exhaust components of a deaerator, so that the material undergoes phase change to obtain a high temperature plastic-crystal phase state; then the material is converted from the high temperature plastic-crystal phase to the glassy-crystal phase; by maintaining the glassy-crystal phase of the material, the heat is stored at low temperature; and finally the heat is released and utilized by applying pressure.

A method for storing solar energy uses the barocaloric materials with glassy-crystal phase of the present invention to absorb the heat generated by a solar thermal collector, so that the material undergoes phase change to obtain a high temperature plastic-crystal phase state; then the material is converted from the high temperature plastic-crystal phase to the glassy-crystal phase; by maintaining the glassy-crystal phase of the material, the heat is stored at low temperature; and finally the heat is released and utilized by applying pressure.

A method for recycling waste heat in a data center machine room uses the barocaloric materials with glassy-crystal phase of the present invention to absorb the heat generated by a data center, so that the material undergoes phase change to obtain a high temperature plastic-crystal phase state; then the material is converted from the high temperature plastic-crystal phase to the glassy-crystal phase; by maintaining the glassy-crystal phase of the material, the heat is stored at low temperature; and finally the heat is released and utilized by applying pressure.

The present invention has the following advantages and beneficial effects:
1. The traditional phase change heat storage materials cannot control the heat release time accurately. The release time depends only on the temperature of a surrounding environment and cannot realize long-distance transportation and utilization. For example, people can only heat a solar cooker when the sun is up, but by the time they want to cook dinner, the solar cooker may have dissipated all the stored heat to the cool evening air. The present invention organically combines the plastic-crystal phase of the barocaloric materials with the glassy-crystal phase, and utilizes the characteristics and the advantages of the two phases respectively to solve the limitations of small latent heat of phase change, low heat storage, impossibility of long-distance transportation and impossibility of accurately controlling the time of heat release in the traditional solid-solid phase change heat storage materials.
2. The solution of the present invention can realize the absorption of waste heat under multiple scenarios, and achieve the effect of efficient cooling of the heat source based on the characteristic of large entropy change in the plastic-crystal phase change process. Compared with the traditional solid-solid phase change heat storage materials, the plastic-crystal phase change process can generate huge latent heat and entropy change. Because the plastic-crystal phase is a highly disordered state, the orientation of the structural unit molecules of the material is completely disordered, but the position of the center of mass constitutes a long-range ordered lattice. The huge disordered orientation of the molecules causes that the entropy change at the solid-state phase change is greater than the melting entropy, and the proportion of the disordered degree of freedom in the total degree of freedom of the system is close to the limit of maintaining the rigidity of the solid. The huge phase change entropy change can absorb a large amount of heat generated by the heat source, effectively reduce the temperature of the heat source, and achieve an efficient cooling effect.
3. The solution of the present invention makes full use of the characteristic of the glassy-crystal phase of the barocaloric materials to realize long-term storage and long-distance transportation and transfer of the heat. The glassy-crystal phase is an intermediate metastable state formed in the process that the plastic-crystal material is changed from the high temperature plastic-crystal phase to low temperature ordered crystal phase. Rapid cooling makes the high temperature disordered state of the material supercooled and frozen, thereby avoiding the full oriented order that generally occurs at low temperature. The existence of the disordered state in the glassy-crystal phase causes that great entropy change may be generated. At the same time, due to the existence of energy barrier between the glassy-crystal phase and the low temperature ordered crystal phase, the state can be preserved in a low temperature environment for a long time without being affected by an external field, and may not spontaneously change to the low temperature crystal phase, thereby achieving the long-distance transportation of the heat.
4. Similar to other barocaloric materials, the transformation from the glassy-crystal phase to the ordered crystal phase can be achieved by, for example, applying isostatic pressure, thereby releasing a large amount of latent heat of phase change. The process is easy to operate and low in economic cost and does not require rigorous and complex devices and working environments. Based on this, in the low temperature environment such as near a freezing point and in the scenario where heat is needed, the heat can be released and utilized controllably by applying isostatic pressure or needling pressurization to the barocaloric materials in the glassy-crystal phase.
5. The phase change behaviors involved in the present invention are all solid-solid phase change, which has the advantages of small deformation volume change, no phase separation, no leakage, small corrosion and simple device. Compared with other solid-solid phase change materials, the heat storage capacity has significant advantage, and by taking 2-amino-2-methyl-1,3-propanediol (CH₃)C(CH₂)(CH₂OH)₂(AMP) as an example, the entropy change is as high as 487 J kg⁻¹ K⁻¹.
6. The solution of the present invention can be applied to the cyclic utilization of the waste heat in the thermal power plant. The waste heat is transferred to the barocaloric materials for storage, and the material after collection of the waste heat can be transported to the low temperature environment that needs heating at a long distance. In the scenario where heat is required, the purpose of releasing heat for heating is achieved by applying a small pressure. The present invention can also be applied to the long-term storage and utilization of solar energy and the cyclic utilization of the waste heat in the data center computer room, and has wide application prospects.

### Description of Drawings

Fig. 1 is a schematic diagram of phase change process and heat absorption and release of barocaloric materials with glassy-crystal phase;
Fig. 2 is a heat flow curve of AMP in a heating process from a low temperature ordered crystal phase to a high temperature plastic-crystal phase;
Fig. 3 is a heat flow curve of AMP in a cooling process from a high temperature plastic-crystal phase to a glassy-crystal phase;
Fig. 4 is a heat flow curve of achieving heat release by applying pressure to AMP in an insulating state at 273K temperature in a glassy-crystal phase;
Fig. 5 is a temperature change curve of achieving heat release by applying pressure to AMP in a room temperature state in a glassy-crystal phase;
Fig. 6 is a cyclic heat flow curve of AMP between a high temperature plastic-crystal phase and a glassy-crystal phase;
Fig. 7 is a heat flow curve of AMP insulated at 273K for 24 hours in a glassy-crystal phase.

### Detailed Description

In order to further understand the present invention, the present invention is described below in combination with examples, but the examples are only used for further elaboration of the characteristics and the advantages of the present invention, rather than limitations to the claims of the present invention.

The solution of the present invention is a method of controllable solid-state phase change heat storage and heat release of barocaloric materials, comprising: step 1: heating a barocaloric materials sample to make the sample in a high temperature plastic-crystal phase. The modes of heating include, but not limited to, heating using a sample chamber of a microcalorimeter or direct heating of the sample using a heating platform.

Step 2: rapidly cooling the barocaloric materials in the high temperature plastic-crystal phase to obtain the glassy-crystal phase barocaloric materials, and realizing long-time heat energy storage in the barocaloric materials. The glassy-crystal phase is an intermediate metastable state formed in the process that the barocaloric materials is changed to the ordered crystal, which can be obtained by cooling the high temperature disordered state of the plastic-crystal phase quickly enough. Rapid cooling makes the high temperature disordered state of the plastic-crystal phase supercooled and frozen, thereby avoiding the full oriented order that generally occurs at low temperature. The existence of the disordered state in the glassy-crystal phase causes that the material in this state still retains great entropy change. The state can be preserved in a low temperature environment for a long time without being affected by an external field, and may not spontaneously change to the low temperature crystal phase. The mode for rapid cooling includes, but not limited to, rapid cooling at a cooling rate >2K/min or instant cooling of the high temperature plastic-crystal phase sample with ice water or liquid nitrogen. Step 3: when the glassy-crystal phase material is applied with a small pressure at low temperature, achieving the change from the glassy-crystal to the ordered crystal, and generating full oriented ordered change in the disordered state of the molecules, accompanied by great entropy change, thereby achieving heat release. When heat release is needed, the heat release is controlled by applying isostatic pressure or needling pressurization as a driving mode to realize the controllable storage, transfer and utilization of heat.

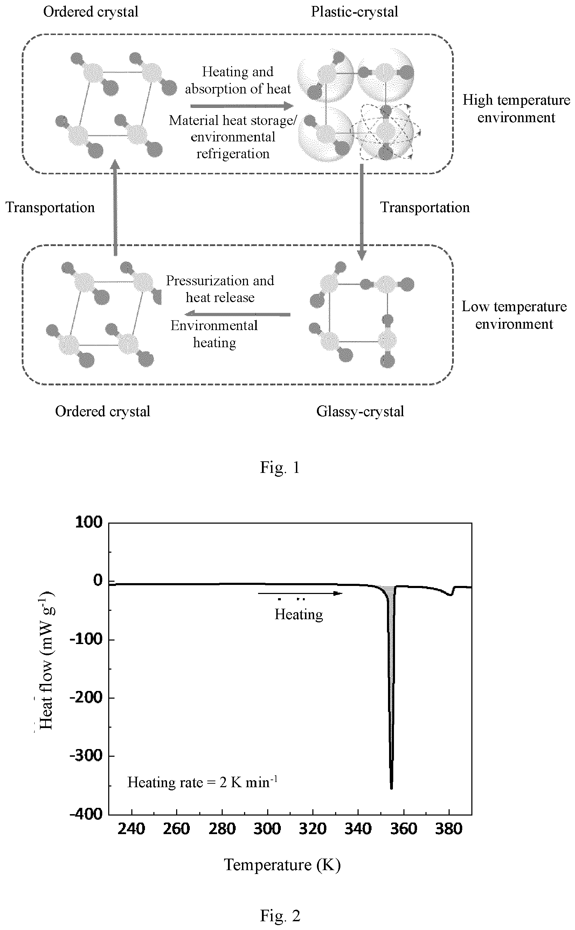

The solution of the present invention further relates to a heat storage and heat exchange device comprising barocaloric materials. The device comprises a heating unit for heating the barocaloric materials so that the barocaloric materials is in a high temperature plastic-crystal phase; a rapid cooling unit for rapidly cooling the barocaloric materials in the high temperature plastic-crystal phase to obtain the glassy-crystal phase barocaloric materials; and a pressure applying unit for applying isostatic pressure or needling to the barocaloric materials when heat release is needed for controlling the heat release to realize the controllable storage, transfer and utilization of heat energy In the cycle process shown in Fig. 1, the barocaloric materials can be used as an energy transfer material in the heat storage and heat exchange device; the solid-state refrigeration function is achieved by utilizing the heat absorption process of the change from the low temperature ordered crystal phase to the high temperature plastic-crystal phase; and the isostatic pressure is applied to drive the change from the glassy-crystal phase to the low temperature ordered crystal phase, so as to realize the function of solid-state phase change heat storage and utilization.

The barocaloric materials of the present invention is a barocaloric materials having the glassy-crystal phase, preferably a plastic-crystal material having the glassy-crystal phase. Because the plastic-crystal material is a highly disordered solid material, the orientation of the structural unit molecules of the material is completely disordered, but the position of the center of mass constitutes a long-range ordered lattice. Thus, the plastic-crystal material is also known as a rotational disordered crystal. The huge disordered orientation of the molecules causes that the entropy change at the solid-state phase change is greater than the melting entropy, and the proportion of the disordered degree of freedom in the total degree of freedom of the system is close to the limit of maintaining the rigidity of the solid. The weak interaction between the molecules leads to great compressibility, and small pressure can regulate the interaction between the molecules and drive the ordered and disordered phase change, so as to change into the entropy change. For the glassy-crystal phase, compared with the plastic-crystal phase, the position of the center of mass still maintains a long-range ordered state, but the disordered orientation state of organic molecules or inorganic structural units is supercooled and frozen, not a completely disordered rotational state. However, compared with the conventional crystal phase, the glassy-crystal phase still has a higher disorder state. Table 1 shows the specific differences between different phase structures and states. Therefore, the plastic-crystal barocaloric materials with the glassy-crystal phase has the characteristics of huge phase change entropy change, and the controllability of phase change and entropy change under pressure modulation, and can be fully applied to the method, device and application of the present invention. In the solution of the present invention, the used barocaloric materials is a barocaloric materials with glassy-crystal phase, preferably one or more of 2-amino-2-methyl-1,3-propanediol (CH₃)C(CH₂)(CH₂OH)₂(AMP), m-carborane C₂B₁₀H₁₂, 1-cyanoadamantane C₁₁H₁₅N(CAN), 2-adamantanone C₁₀H₁₄O(AON) and pentachloronitrobenzene C₆Cl₅NO₂(PCNB) in the plastic-crystal material,further preferably 2-amino-2-methyl-1,3-propanediol (CH₃)C(CH₂)(CH₂OH)₂(AMP) or m-carborane C₂B₁₀H₁₂, and still further preferably 2-amino-2-methyl-1,3-propanediol (CH₃)C(CH₂)(CH₂OH)₂(AMP).

**Table 1 Comparison of Degrees of Order between Different Phase Structures and States**

| | | Center of Mass | Orientation |
|---|---|---|---|
| Solid | Crystal | Ordered | Ordered |
| | Plastic-crystal | Ordered | Rotational disordered (quasi-liquid) |
| | Glassy-crystal | Ordered | Frozen disordered |
| Liquid | | Disordered | Disordered |

The application of the present invention further comprises cyclic utilization acting on the waste heat in a thermal power plant. In one embodiment, the barocaloric materials with the glassy-crystal phase in the low temperature ordered crystal phase is placed in a power plant cooling tower. When the circulating cooling water heated by waste heat flows through the barocaloric materials, the material may change from the low temperature phase to the high temperature plastic-crystal phase, thereby transferring the waste heat to the material for storage. At the same time, the circulating water is cooled and then continues to return to collect the waste heat of a power plant. After the high temperature plastic-crystal phase material is rapidly cooled, the material can be changed into the glassy-crystal phase, which can realize the long-distance transportation of the material after collection of the waste heat to a low temperature environment that needs heating. In the scenario that requires heat, by applying small pressure, the material is driven to change from the glassy-crystal phase to the low temperature ordered crystal phase, so as to achieve the purpose of releasing heat for heating.

The application of the present invention further comprises the use of the barocaloric materials having the glassy-crystal phase in the storage of solar energy. An embodiment uses the barocaloric materials to absorb the heat generated by a solar thermal collector. For example, the barocaloric materials is placed in the solar thermal collector or heat storage component so that the material undergoes phase change to obtain a high temperature plastic-crystal phase state; then the material is converted from the high temperature plastic-crystal phase to the glassy-crystal phase; by maintaining the state of the glassy-crystal phase of the material, the heat is stored at low temperature; and finally the heat is released and utilized by applying pressure.

The application of the present invention further comprises cyclic utilization acting on the waste heat in a data center machine room. An embodiment uses the barocaloric materials with glassy-crystal phase to absorb the heat generated by a data center. For example, the barocaloric materials is installed at a heat radiating end of a host of the data center so that the material undergoes phase change to obtain a high temperature plastic-crystal phase state; then the material is converted from the high temperature plastic-crystal phase to the glassy-crystal phase; by maintaining the state of the glassy-crystal phase of the material, the heat is stored at low temperature; and finally the heat is released and utilized by applying pressure.

The preferred embodiments of the present invention are specifically described below by taking 2-amino-2-methyl-1,3-propanediol (CH₃)C(CH₂)(CH₂OH)₂(AMP) as an example.

### A first embodiment of acquiring the glassy-crystal phase:

AMP bulk samples in the low temperature ordered crystal phase are put into airtight high pressure sample pools, which are compared with empty sample chambers containing µDSC7 (produced by French Setaram company) microcalorimeters in the sample pools. A pressurizing device is used to inject nitrogen into the two sample pools to maintain a normal pressure state (0.1 MPa); the sample pools are heated from 228K to 383K at a heating rate of 2K/min; and the heat flow data of the samples is recorded, as shown in the curve in Fig. 2. It can be found that AMP changes the phase at 355K and absorbs heat, the corresponding enthalpy change value is 215J g⁻¹, and the entropy change value is 606J kg⁻¹ K⁻¹. The process can be used for absorbing the heat of a heat source, to achieve a refrigeration effect. In addition, an endothermic peak that appears near 381K corresponds to the melting point of the AMP. Thus, the high temperature plastic-crystal phase of the AMP is obtained.

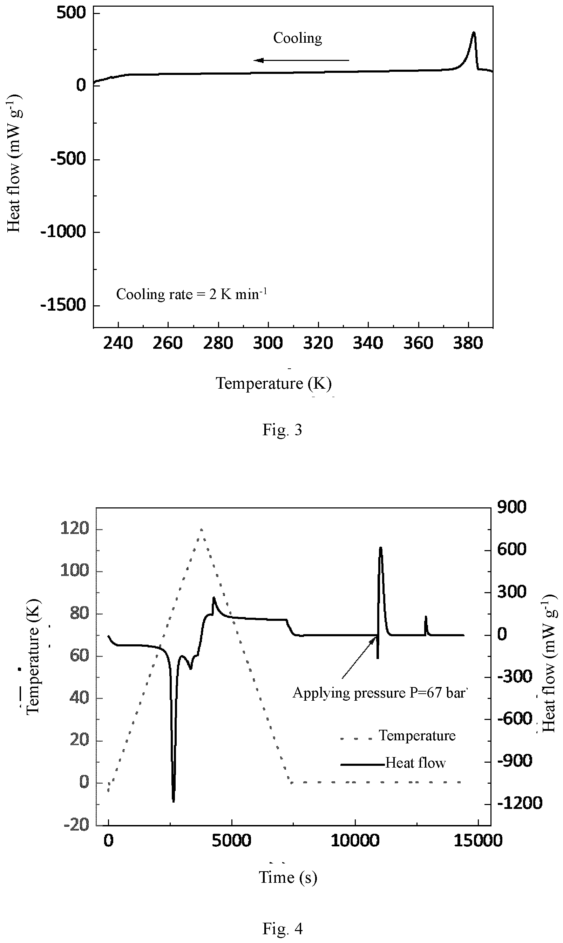

Then, rapidly cool the high temperature plastic-crystal phase sample to a low temperature state of 273K at a cooling rate ≥2K/min, so that the high temperature disordered state of the sample is supercooled and frozen, thereby avoiding the full oriented ordered change that generally occurs at low temperature. Finally, the AMP is changed into a glassy-crystal phase state. The heat flow data of the samples is recorded, as shown in the curve in Fig. 3. It can be found that an exothermic peak that appears at 378K corresponds to the freezing point of the AMP. Different from the heating process, no obvious exothermic peak is found in the continuous cooling process. This feature can be used for achieving the storage and the transportation of the heat without being affected by the spontaneous phase change of cooling.

### A second embodiment of acquiring the glassy-crystal phase:

AMP powder samples in the ordered crystal phase at room temperature are placed inside a a glass container and heated by a heating device such as a heating platform. When the temperature exceeds the temperature-rising phase change temperature of the AMP (the change from the low temperature ordered crystal phase to the high temperature plastic-crystal phase), AMP with the high temperature plastic-crystal phase can be obtained, and the AMP in this state is rapidly cooled by ice water or liquid nitrogen to make the high temperature disordered state supercooled and frozen instantaneously, thereby obtaining the glassy-crystal phase state.

### Storage of heat energy:

The obtained glassy-crystal phase is continuously stored at 273K, or heated to ≤ room temperature, and the AMP can be kept in the glassy-crystal phase state for a long time, without spontaneously changing to the low temperature ordered crystal phase. This feature ensures that the AMP material in the glassy-crystal phase can be used in different low temperature environments, and can also avoid spontaneous phase change caused by temperature change, so that long-distance transportation can be achieved without spontaneous phase change heat release.

### Controllable heat release:

The AMP material with the glassy-crystal phase obtained by the first embodiment is continuously stored at 273K temperature. In this state, after the heat is preserved for 2 hours, a pressurization device is used for injecting nitrogen into the two sample pools to increase the gas pressure to 67bar instantly, and the heat flow data of the samples is recorded, as shown in the curve in Fig. 4. It can be found that when the pressure of 67bar is applied to the AMP glassy-crystal phase held at 273K temperature, the sample has an obvious exothermic peak, which corresponds to the heat release process of the AMP glassy-crystal phase pressurized to the low temperature phase. The corresponding enthalpy change value is 133 J g⁻¹ and the entropy change value is 487 J kg⁻¹ K⁻¹. The results indicate that the heat stored in the AMP glassy-crystal phase can be controlled by small pressure to achieve the function of active heat release. The AMP can be changed from the glassy-crystal phase to the ordered crystal phase through the pressure. The phase change is accompanied by the release of massive latent heat, thereby achieving the main control release and controllable utilization of the heat stored by the AMP material.

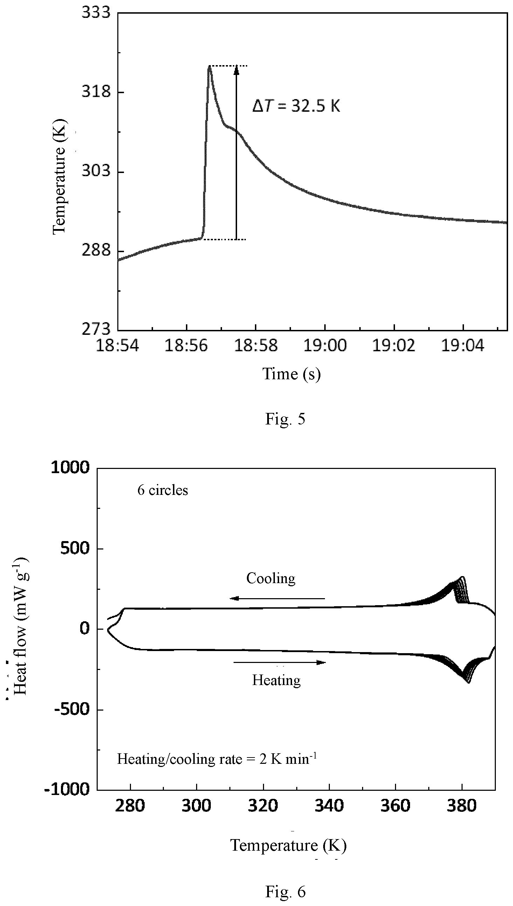

For the sample obtained by the second embodiment, the real-time temperature of the AMP material with the glassy-crystal phase stored at room temperature can be monitored by using a K-type thermocouple. When the temperature is constant at room temperature, the AMP material is changed from the glassy-crystal phase to the low temperature ordered crystal phase by needling and pressurization of a sharp object such as acupuncture, and the real-time temperature of the sample is monitored at the same time. The results are shown in the curve in Fig. 5. It can be found that at the same time of phase change, the temperature of the sample is increased instantaneously, and the temperature change can reach 32.5K under the condition of incomplete thermal insulation, so as to achieve the active release and controllable utilization of the stored heat.

### AMP heating/cooling cycle process from high temperature phase to glassy-crystal:

AMP samples in the low temperature ordered crystal phase are put into airtight high pressure sample pools, which are compared with empty sample chambers containing µDSC7 (produced by French Setaram company) microcalorimeters in the sample pools. A pressurizing device is used to inject nitrogen into the two sample pools to maintain a normal pressure state (0.1 MPa); the sample pools are heated from 273K to 383K at a heating rate of 2K/min and then cooled back to 273K at a cooling rate of 2K/min; the above process is circled for 6 times; and the heat flow data of the samples is recorded, as shown in the curves in Fig. 6. The results indicate that the AMP does not change from the glassy-crystal phase to the low temperature ordered phase in the process of heating and cooling within a temperature range from high temperature to 273K, and is recyclable.

### Aging stability of AMP glassy-crystal phase:

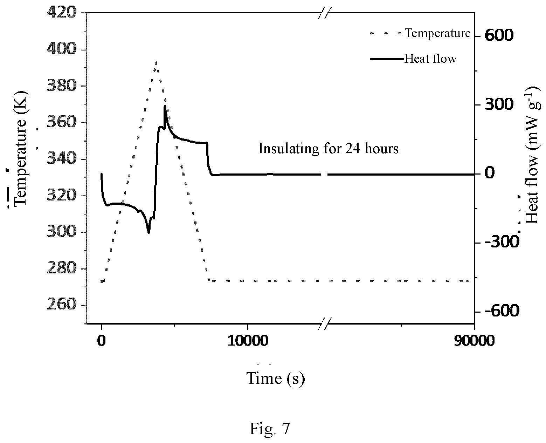

AMP samples in the low temperature ordered crystal phase are put into airtight high pressure sample pools, which are compared with empty sample chambers containing µDSC7 (produced by French Setaram company) microcalorimeters in the sample pools. A pressurizing device is used to inject nitrogen into the two sample pools to maintain a normal pressure state (0.1 MPa); the sample pools are heated from 273K to 383K at a heating rate of 2K/min and then cooled back to 273K at a cooling rate of 2K/min; the temperature is set as 273K to preserve the heat for 24 hours; and the heat flow data of the samples is recorded, as shown in the curve in Fig. 7. The results indicate that the AMP glassy-crystal phase can be stably stored at 273K ambient temperature and has aging stability. This feature provides a guarantee for the heat energy storage of such material at low temperature environments.

### Application 1 of the methods and the materials of the present invention in solid-state phase change heat storage:

Generally, the actual thermal efficiency of the thermal power plant is low, and about 60% of the heat is taken away by condenser circulating cooling water and discharged into the environment. The circulating cooling water of the power plant belongs to low-grade heat energy, and the direct utilization range is narrow. In the past, the circulating cooling water was directly discharged by a cooling tower. At the same time, there are all kinds of waste heat in the production process of the thermal power plant, such as shaft seal leakage, boiler blowdown, deaerator exhaust, etc., which all belong to the working media that carry the waste heat. These kinds of heat were previously discharged directly into the environment without being used. These kinds of discharged heat not only cause thermal pollution to the environment, but also reduce the energy efficiency of the thermal power plant. Based on the above heat generation and heat dissipation links, the low temperature ordered crystal phase AMP is placed in equipment comprising pipelines of a power plant cooling tower, boiler blowdown components and exhaust components of a deaerator. When the temperature of the pipelines or components exceeds 355K, the AMP will be changed from the low temperature phase to the high temperature plastic-crystal phase, thereby transferring the waste heat to the AMP for storage, and simultaneously achieving cooling of the pipelines or components. The AMP after collection of the waste heat will be gradually changed from the high temperature phase to the glassy-crystal phase at low ambient temperature, without the change to the low temperature ordered crystal phase, thereby achieving the storage of heat without spontaneous phase change heat release due to the reduction of the ambient temperature. Therefore, the AMP of the glassy-crystal phase can be transported over long distances and can be transported to distant low temperature environments (for example, less than 273K). Finally, in the scenario where heat is required, the AMP can be driven to change from the glassy-crystal phase to the low temperature ordered crystal phase by applying a small pressure, and the process is accompanied by the release of massive latent heat of phase change, so as to achieve the purpose of actively controlling heat release by using pressure stimulation.

### Application 2 of the methods and the materials of the present invention in solid-state phase change heat storage:

Solar energy is a kind of clean renewable energy, and in all the renewable energy, solar energy is the most widely distributed and the easiest to obtain. However, solar energy has strong intermittency and instability, and needs to be stored in a heat storage device in order to ensure the stable operation of solar energy utilization. Based on the above heat storage scenario of the solar energy, the low temperature ordered crystal phase AMP can be placed in the solar thermal collector or heat storage components. When the above heat is collected so that the temperature of the AMP exceeds 355K, the AMP will be changed from the low temperature phase to the high temperature plastic-crystal phase, so that the heat energy generated by the solar energy is transferred to the AMP for storage. The AMP after collection of the massive heat will be gradually changed from the high temperature phase to the glassy-crystal phase under the condition that the ambient temperature is rapidly reduced, without the change to the low temperature ordered crystal phase, thereby achieving the storage of heat without spontaneous phase change heat release due to the reduction of the ambient temperature. Therefore, the AMP of the glassy-crystal phase can be transported over long distances and can be transported to distant low temperature environments (for example, less than 273K). Finally, in the scenario where heat is required, the AMP can be driven to change from the glassy-crystal phase to the low temperature ordered crystal phase by applying a small pressure, and the process is accompanied by the release of massive latent heat of phase change, so as to achieve the purpose of actively controlling heat release by using pressure stimulation.

### Application 3 of the methods and the materials of the present invention in solid-state phase change heat storage:

The data center becomes increasingly "highly popular" in the world. On the one hand, 5G gradually approaches large-scale commercial use, and the data center, as the carrier of data processing equipment, undertakes huge business needs. On the other hand, the data center is included in the national "new infrastructure" strategic category, becomes an important part of the national information infrastructure construction, and is also the key support for the construction of the "double economic cycle" pattern. However, with the rapid increase of the single-machine power consumption in the data center, the temperature of the equipment in the machine room is directly increased greatly, which not only harms the performance of the equipment, but also consumes much power cost for the operation of refrigeration equipment such as air conditioners. In view of such applications, for example, the low temperature ordered crystal phase AMP can be installed at the heat radiating end of the host in the data center. When the heat radiating temperature exceeds 355K, the AMP will be changed from the low temperature phase to the high temperature plastic-crystal phase, thereby transferring the generated heat to the AMP for storage. The AMP after collection of the massive heat will be gradually changed from the high temperature phase to the glassy-crystal phase under the condition that the ambient temperature is rapidly reduced, without the change to the low temperature ordered crystal phase, thereby achieving the storage of heat without spontaneous phase change heat release due to the reduction of the ambient temperature. Therefore, the AMP of the glassy-crystal phase can be transported over long distances and can be transported to distant low temperature environments (for example, less than 273K). Finally, in the scenario where heat is required, the AMP can be driven to change from the glassy-crystal phase to the low temperature ordered crystal phase by applying a small pressure, and the process is accompanied by the release of massive latent heat of phase change, so as to achieve the purpose of actively controlling heat release by using pressure stimulation.

The above embodiments only aim to explain the technical conception and characteristics of the present invention, and are intended to make those skilled in the art know the content of the present invention and implement same accordingly, which cannot limit the protection scope of the present invention. Any effective change or modification made according to the spirit substance of the present invention shall be covered within the protection scope of the present invention.

## Claims

1. A method of controllable solid-state phase change heat storage and heat release of barocaloric materials, **characterized in that**: the method comprises the following steps:
step 1: heating a barocaloric materials sample to make the sample in a high temperature plastic-crystal phase state;
step 2: rapidly cooling the barocaloric materials in the high temperature plastic-crystal phase to obtain the glassy-crystal phase barocaloric materials, and realizing long-time heat energy storage in the barocaloric materials under the glassy-crystal phase state;
step 3: when heat release is needed, controlling the heat release by applying pressure as a driving mode to realize the controllable storage, transfer and utilization of heat energy.

2. The method according to claim 1, **characterized in that**: in step 2, the mode for rapid cooling to obtain the glassy-crystal phase comprises cooling at a cooling rate >2K/min or instant cooling of the high temperature plastic-crystal phase sample with ice water or liquid nitrogen.

3. The method according to claim 1, **characterized in that**: in step 3, the mode of applying pressure comprises isostatic pressure applying or needling pressurization.

4. The method according to claim 1, **characterized in that**: the barocaloric materials is a barocaloric materials with glassy-crystal phase.

5. The method according to claim 4, **characterized in that**: the barocaloric materials is one or more of 2-amino-2-methyl-1,3-propanediol (CH₃)C(CH₂)(CH₂OH)₂(AMP), m-carborane C₂B₁₀H₁₂, 1-cyanoadamantane C₁₁H₁₅N(CAN), 2-adamantanone C₁₀H₁₄O(AON) and pentachloronitrobenzene C₆Cl₅NO₂(PCNB).

6. The method according to claim 5, **characterized in that**: when 2-amino-2-methyl-1,3-propanediol (AMP) is the barocaloric materials, the material generates phase change at 355 K and absorbs heat to change into the high temperature plastic-crystal phase state, a corresponding enthalpy change value is 215 J g⁻¹, and an entropy change value is 606 J kg⁻¹ K⁻¹.

7. The method according to claim 5, **characterized in that**: the glassy-crystal phase state is obtained when 2-amino-2-methyl-1,3-propanediol (AMP) in the high temperature plastic-crystal phase state is rapidly cooled to a low temperature state of 273K.

8. The method according to claim 5, **characterized in that**: the obtained 2-amino-2-methyl-1,3-propanediol (AMP) in the glassy-crystal phase state is stored at 273K, or heated to a temperature state less than or equal to room temperature; and the heat can be stored in 2-amino-2-methyl-1,3-propanediol (AMP) for a long time, without spontaneous phase change heat release.

9. The method according to claim 8, **characterized in that**: when 2-amino-2-methyl-1,3-propanediol (AMP) in an insulating state at 273K temperature is applied with a pressure, an obvious exothermic peak appears, the corresponding enthalpy change value is 133 J g⁻¹ and the entropy change value is 487 J kg⁻¹ K⁻¹.

10. The method according to claim 9, **characterized in that**: an applied pressure value is greater than or equal to 67bar.

11. A heat storage and heat exchange device comprising barocaloric materials, **characterized in that**: the device comprises a heating unit for heating the barocaloric materials so that the barocaloric materials is in a high temperature plastic-crystal phase; a rapid cooling unit for rapidly cooling the barocaloric materials in the high temperature plastic-crystal phase to obtain the glassy-crystal phase barocaloric materials; and a pressure applying unit for applying isostatic pressure to the barocaloric materials when heat release is needed for controlling the heat release to realize the controllable storage, transfer and utilization of heat energy.

12. The heat storage and heat exchange device according to claim 11, **characterized in that**: the barocaloric materials is one or more of 2-amino-2-methyl-1,3-propanediol (CH₃)C(CH₂)(CH₂OH)₂(AMP), m-carborane C₂B₁₀H₁₂, 1-cyanoadamantane C₁₁H₁₅N(CAN), 2-adamantanone C₁₀H₁₄O(AON) and pentachloronitrobenzene C₆Cl₅NO₂(PCNB) in plastic-crystal material.

13. A method for recycling waste heat in a thermal power plant, **characterized in that**: the barocaloric materials of claim 1 is used for absorbing the heat of equipment comprising pipelines of a power plant cooling tower, boiler blowdown components and exhaust components of a deaerator, so that the material undergoes phase change to obtain a high temperature plastic-crystal phase state; then the material is converted from the high temperature plastic-crystal phase to the glassy-crystal phase; by maintaining the state of the glassy-crystal phase of the material, the heat is stored at low temperature; and finally the heat is released and utilized by applying pressure.

14. A method for storing solar energy, **characterized in that**: the barocaloric materials of claim 1 is used for absorbing the heat generated by a solar thermal collector, so that the material undergoes phase change to obtain a high temperature plastic-crystal phase state; then the material is converted from the high temperature plastic-crystal phase to the glassy-crystal phase; by maintaining the state of the glassy-crystal phase of the material, the heat is stored at low temperature; and finally the heat is released and utilized by applying pressure.

15. A method for recycling waste heat in a data center machine room, **characterized in that**: the barocaloric materials of claim 1 is used for absorbing the heat generated by a data center, so that the material undergoes phase change to obtain a high temperature plastic-crystal phase state; then the material is converted from the high temperature plastic-crystal phase to the glassy-crystal phase; by maintaining the state of the glassy-crystal phase of the material, the heat is stored at low temperature; and finally the heat is released and utilized by applying pressure.
